# EUROPÄISCHE PATENTSCHRIFT

(11) **EP 1 213 330 B1**
(45) Veröffentlichungstag und Bekanntmachung des Hinweises auf die Patenterteilung: **15.02.2017**
(21) Anmeldenummer: 01126906.5
(22) Anmeldetag: 13.11.2001
(51) Int. Cl.: C09C 1/00

(54) **Silberfarbenes Glanzpigment**
Silvery Pearlescent Pigment
Pigment nacré de couleurs d'argent

(30) Priorität: 07.12.2000 DE 10061178
(43) Veröffentlichungstag der Anmeldung: 12.06.2002
(73) Patentinhaber: Merck Patent GmbH, 64293 Darmstadt (DE)
(72) Erfinder: Schmidt, Christoph, Dr., 65830 Kriftel (DE); Heyland, Andrea, 64385 Reichelsheim (DE); Fornoff, Claudia, 64853 Otzberg (DE); Brückner, Hans-Dieter, 64289 Darmstadt (DE)

(56) Entgegenhaltungen:
- WO-A-98/12266
- WO-A-99/20695
- US-A- 4 038 099

## Beschreibung

Die vorliegende Erfindung betrifft silberfarbene Glanzpigmente auf der Basis von mehrfach beschichteten plättchenförmigen Substraten.

Glanz- oder Effektpigmente werden in vielen Bereichen der Technik eingesetzt, insbesondere im Bereich der Autolacke, der dekorativen Beschichtung, im Kunststoff, in Farben, Druckfarben sowie in kosmetischen Formulierungen.

Glanzpigmente, die einen winkelabhängigen Farbwechsel zwischen mehreren Interferenzfarben zeigen, sind aufgrund Ihres Farbenspiels von besonderem Interesse für Autolacke sowie bei fälschungssicheren Wertschriften.

Aus dem Stand der Technik sind Verfahren zur Herstellung von Perlglanzpigmenten bekannt, mit deren Hilfe alternierende Schichten mit hoher und niedriger Brechzahl auf feinteilige Substrate aufgebracht werden können. Derartige Pigmente auf Basis von mehrfach beschichteten plättchenförmigen Substraten sind z. B. aus der U.S. 4,434,010, JP H7-759, U.S. 3,438,796, U.S. 5,135,812, DE 44 05 494, DE 44 37 753, DE 195 16 181, DE 195 15 988, WO 98/12266 und WO 99/20695 bekannt.

Besondere Bedeutung besitzen dabei Perlglanzpigmente auf mineralischer Basis. Perlglanzpigmente werden durch Beschichtung eines anorganischen, plättchenförmigen Trägers mit einer hochbrechenden, meist oxidischen Schicht hergestellt. Die Farbe dieser Pigmente wird durch wellenlängenselektive Teilreflektion und Interferenz des reflektierten bzw. transmittierten Lichts an den Medium/Oxid- bzw. Oxid/Substrat-Grenzflächen hervorgerufen.

Die Interferenzfarbe dieser Pigmente wird von der Dicke der Oxidschicht bestimmt. Der Farbton eines Interferenzsilberpigments wird durch eine im optischen Sinn einzelne hochbrechende Schicht erzeugt, deren optische Dicke ein Reflexionsmaximum (1. Ordnung) im sichtbaren Wellenlängenbereich bei ca. 500 nm bedingt. Diese Wellenlänge nimmt das menschliche Auge als die Farbe Grün wahr. Der Intensitätsverlauf dieses Maximums auf deren Wellenlängenachse ist jedoch so breit, dass im ganzen Bereich des sichtbaren Lichts so viel Licht reflektiert wird, dass das menschliche Auge einen sehr hellen, aber farblosen Eindruck wahrnimmt.

Gemäß den - insbesondere aus der Vergütung optischer Bauteile - bekannten Regeln der Optik dünner Schichten steigt im Vergleich zum Einschichtsystem die Intensität am Interferenzmaximum um ca. 60 % an. Demzufolge wird das Profil des durch Interferenz reflektierten Lichts wesentlich ausgeprägter, so dass für ein solches mehrschichtiges System eine grüne Reflexionsfarbe zu erwarten ist.

Überraschenderweise wurde nun gefunden, dass ein reales Interferenzsystem in Form von alternierenden hochbrechenden Schichten aus TiO₂, und niedrigbrechenden Schichten auf einem transparenten Substratplättchen keinen grünen, sondern bei bestimmten Schichtdicken einen silbernen Farbeindruck hervorruft.

Gegenstand der Erfindung sind daher silberfarbene Glanzpigmente auf der Basis von mehrfach beschichteten plättchenförmigen Substraten, die mindestens eine Schichtenfolge aus
(A) einer hochbrechenden Beschichtung bestehend aus TiO₂ mit einer Schichtdicke von 20 - 70 nm,
(B) einer farblosen Beschichtung mit einem Brechungsindex n ≤ 1,8 mit einer Schichtdicke von 20 - 100 nm,
(C) einer hochbrechenden Beschichtung bestehend aus TiO₂ mit einer Schichtdicke von 20 - 70 nm,
und optional
(D) einer äußeren Schutzschicht
enthalten.

Die erfindungsgemäßen Silberpigmente zeigen gegenüber den bekannten Perlglanzpigmenten im Silberbereich
- einen stärkeren, besonders metallisch wirkenden Glanz bei steiler Betrachtungsweise
- eine höhere Transparenz unter flachen Betrachtungswinkeln und
- eine hellere Körperfarbe.

Gegenstand der Erfindung ist weiterhin die Verwendung der erfindungsgemäßen Silberpigmente in Farben, Lacken, Druckfarben, Kunststoffen, keramischen Materialien, Gläsern und kosmetischen Formulierungen, insbesondere in Druckfarben. Weiterhin sind die erfindungsgemäßen Pigmente auch zur Herstellung von Pigmentpräparationen sowie zur Herstellung von Trockenpräparaten, wie z. B. Granulaten, Chips, Pellets, Briketts, etc., geeignet. Die Trockenpräparate sind insbesondere für Druckfarben geeignet.

Geeignete Basissubstrate für die erfindungsgemäßen Mehrschichtpigmente sind selektiv oder nicht selektiv absorbierende plättchenförmige Substrate. Bevorzugte Substrate sind Schichtsilikate. Insbesondere geeignet sind natürlicher und/oder synthetischer Glimmer, Talkum, Kaolin, plättchenförmige Eisen- oder Aluminiumoxide, Glas-, SiO₂-, TiO₂-, Graphitplättchen, synthetische trägerfreie Plättchen, Titannitrid, Titansilicid, Liquid crystal polymers (LCPs), holographische Pigmente, BiOCl, plättchenförmige Mischoxide, wie z. B. FeTiO₃, Fe₂TiO₅, oder andere vergleichbare Materialien.

Die Größe der Basissubstrate ist an sich nicht kritisch und kann auf den jeweiligen Anwendungszweck abgestimmt werden. In der Regel haben die plättchenförmigen Substrate eine Dicke zwischen 0,005 und 10 µm, insbesondere zwischen 0,05 und 5 µm. Die Ausdehnung in den beiden anderen Bereichen beträgt üblicherweise zwischen 1 und 500 µm, vorzugsweise zwischen 2 und 200 µm, und insbesondere zwischen 5 und 60 µm.

Die Dicke der einzelnen Schichten (A) und (B) und (C) mit hohem bzw. niedrigem Brechungsindex auf dem Basissubstrat ist wesentlich für die optischen Eigenschaften des Pigments. Für das Silberpigment mit intensivem Glanzeffekt muss die Dicke der einzelnen Schichten genau aufeinander eingestellt werden.

Die Dicke der Schicht (A) bzw. (C) beträgt 20-70 nm. Die TiO₂-Schichten (A) und (C) können gleiche oder unterschiedliche Schichtdicken aufweisen. Die Dicke der Schicht (B) beträgt 20-100 nm, insbesondere 30-80 nm.

Die Pigmente können mehrere, gleiche oder verschiedene Kombinationen an Schichtpaketen enthalten, bevorzugt ist aber die Belegung des Substrats mit nur einem Schichtpaket (A) + (B) + (C) + optional (D). Zur Intensivierung der Farbstärke kann das erfindungsgemäße Pigment bis zu 4 Schichtpakete enthalten, wobei die Dicke aller Schichten auf dem Substrat 3 µm allerdings nicht überschreiten sollte. Vorzugsweise wird eine ungerade Anzahl von Schichten auf das plättchenförmige Substrat aufgebracht mit je einer hochbrechenden Schicht in innerster und äußerster Lage. Besonders bevorzugt ist ein Aufbau von drei optischen Interferenzschichten in der Reihenfolge (A) (B) (C).

Als farblose niedrigbrechende für die Beschichtung (B) geeignete Materialien sind vorzugsweise Metalloxide bzw. die entsprechenden Oxidhydrate, wie z. B. SiO₂, Al₂O₃, AIO(OH), B₂O₃, MgF₂, MgSiO₃ oder ein Gemisch der genannten Metalloxide, geeignet. Bei der Schicht (B) handelt es sich insbesondere um eine SiO₂-Schicht.

Die erfindungsgemäßen Pigmente lassen sich leicht herstellen durch die Erzeugung mehrerer hoch- und niedrigbrechender Interferenzschichten mit genau definierter Dicke und glatter Oberfläche auf den feinteiligen, plättchenförmigen Substraten.

Die Metalloxidschichten werden vorzugsweise nasschemisch aufgebracht, wobei die zur Herstellung von Perlglanzpigmenten entwickelten nasschemischen Beschichtungsverfahren angewendet werden können. Derartige Verfahren sind z. B. beschrieben in DE 14 67 468, DE 19 59 988, DE 20 09 566, DE 22 14 545, DE 22 15 191, DE 22 44 298,
DE 23 13 331, DE 25 22 572, DE 31 37 808, DE 31 37 809,
DE 23 13 331, DE 25 22 572, DE 31 37 808, DE 31 37 809,
DE 31 51 343, DE 31 51 354, DE 31 51 355, DE 32 11 602,
DE 32 35 017 oder auch in weiteren dem Fachmann bekannten Patentdokumenten und sonstigen Publikationen.

Bei der Nassbeschichtung werden die Substratpartikel in Wasser suspendiert und mit ein oder mehreren hydrolysierbaren Metallsalzen oder einer Wasserglaslösung bei einem für die Hydrolyse geeigneten pH-Wert versetzt, der so gewählt wird, dass die Metalloxide bzw. Metalloxidhydrate direkt auf den Plättchen ausgefällt werden, ohne dass es zu Nebenfällungen kommt. Der pH-Wert wird üblicherweise durch gleichzeitiges Zudosieren einer Base und/oder Säure konstant gehalten. Anschließend werden die Pigmente abgetrennt, gewaschen und bei 50-150 °C für 6-18 h getrocknet und gegebenenfalls 0,5-3 h geglüht, wobei die Glühtemperatur im Hinblick auf die jeweils vorliegende Beschichtung optimiert werden kann. In der Regel liegen die Glühtemperaturen zwischen 250 und 1000 °C, vorzugsweise zwischen 350 und 900 °C. Falls gewünscht können die Pigmente nach Aufbringen einzelner Beschichtungen abgetrennt, getrocknet und ggf. geglüht werden, um dann zur Auffällung der weiteren Schichten wieder resuspendiert zu werden.

Weiterhin kann die Beschichtung auch in einem Wirbelbettreaktor durch Gasphasenbeschichtung erfolgen, wobei z. B. die in EP 0 045 851 und EP 0 106 235 zur Herstellung von Perlglanzpigmenten vorgeschlagenen Verfahren entsprechend angewendet werden können.

Der Farbton der Pigmente kann unter Erhaltung des Silbereffekts in sehr weiten Grenzen durch unterschiedliche Wahl der Belegungsmengen bzw. der daraus resultierenden Schichtdicken variiert werden. Die Feinabstimmung für einen bestimmten Farbton kann über die reine Mengenwahl hinaus durch visuell oder messtechnisch kontrolliertes Anfahren der gewünschten Farbe erreicht werden.

Zur Erhöhung der Licht-, Wasser- und Wetterstabilität empfiehlt es sich häufig, in Abhängigkeit vom Einsatzgebiet, das fertige Pigment einer Nachbeschichtung oder Nachbehandlung zu unterziehen. Als Nachbeschichtungen bzw. Nachbehandlungen kommen beispielsweise die in den DE-PS 22 15 191, DE-OS 31 51 354, DE-OS 32 35 017 oder
DE-OS 33 34 598 beschriebenen Verfahren in Frage. Durch diese Nachbeschichtung (Schicht D) wird die chemische Stabilität weiter erhöht oder die Handhabung des Pigments, insbesondere die Einarbeitung in unterschiedliche Medien, erleichtert.

Die erfindungsgemäßen Pigmente sind mit einer Vielzahl von Farbsystemen kompatibel vorzugsweise aus dem Bereich der Lacke, Farben und Druckfarben. Für die Herstellung der Druckfarben für z. B. den Tiefdruck, Flexodruck, Offsetdruck, Offsetüberdrucklackierung, ist eine Vielzahl von Bindern, insbesondere wasserlösliche Typen, geeignet, wie sie z. B. von den Firmen BASF, Marabu, Pröll, Sericol, Hartmann, Gebr. Schmidt, Sicpa, Aarberg, Siegberg, GSB-Wahl, Follmann, Ruco oder Coates Screen INKS GmbH vertrieben werden. Die Druckfarben können auf Wasserbasis oder Lösemittelbasis aufgebaut sein. Weiterhin sind die Pigmente auch für die Lasermarkierung von Papier und Kunststoffen, sowie für Anwendungen im Agrarbereich, z. B. für Gewächshausfolien, sowie z. B. für die Farbgebung von Zeltplanen, geeignet.

Da die erfindungsgemäßen Silberpigmente starken Glanz mit hoher Transparenz und neutraler Körperfarbe verbinden, lassen sich mit ihnen besonders wirksame Effekte in den verschiedenen Anwendungsmedien erzielen, z. B. in kosmetischen Formulierungen, wie z. B. Nagellacken, Lippenstiften, Presspudern, Gelen, Lotionen, Seifen, Zahnpasta, in Lacken, wie z. B. Autolacken, Industrielacken und Pulverlacken, sowie in Kunststoffen, in der Keramik sowie im Hobbybereich für Window Colors.

Es versteht sich von selbst, dass für die verschiedenen Anwendungszwecke die Mehrschichtpigmente auch vorteilhaft in Abmischung mit organischen Farbstoffen, organischen Pigmenten oder anderen Pigmenten, wie z. B. transparenten und deckenden Weiß-, Bunt- und Schwarzpigmenten sowie mit plättchenförmigen Eisenoxiden, organischen Pigmenten, holographischen Pigmenten, LCPs (Liquid Crystal Polymers), und herkömmlichen transparenten, bunten und schwarzen Glanzpigmenten auf der Basis von metalloxidbeschichteten Glimmer- und SiO₂-Plättchen, etc., verwendet werden können. Die Mehrschichtpigmente können in jedem Verhältnis mit handelsüblichen Pigmenten und Füllern gemischt werden.

Die erfindungsgemäßen Pigmente sind weiterhin geeignet zur Herstellung von fließfähigen Pigmentpräparationen und Trockenpräparaten, insbesondere für Druckfarben, enthaltend ein oder mehrere erfindungsgemäße Pigmente, Bindemittel und optional ein oder mehrere Additive.

Gegenstand der Erfindung ist somit auch die Verwendung der Pigmente in Formulierungen wie Farben, Druckfarben, Sicherheitsdruckfarben, Lacken, Kunststoffen, keramischen Materialien, Gläsern und in kosmetischen Formulierungen.

Die nachfolgenden Beispiele sollen die Erfindung näher erläutern ohne sie jedoch zu beschränken.

### Beispiele

### Beispiel 1

100 g Glimmer der Teilchengröße 10-60 µm werden in 2 l entmineralisiertem Wasser auf 75 °C aufgeheizt. Nach Erreichen dieser Temperatur wird unter Rühren eine Lösung bestehend aus 3 g SnCl₄ x 5 H₂O in 90 g Wasser langsam zu der Glimmersuspension zudosiert. Der pH-Wert wird mit 32%-iger Natronlauge konstant bei 2,0 gehalten. Danach wird der pH-Wert auf 1,8 gesenkt und bei diesem pH-Wert werden 270 g einer 32%igen TiCl₄-Lösung zudosiert, wobei der pH-Wert mit 32%iger Natronlauge konstant gehalten wird. Anschließend wird der pH-Wert auf 7,5 angehoben und bei diesem pH-Wert werden 270 g Natronwasserglaslösung (13,5 Gew.% SiO₂) langsam zudosiert, wobei der pH-Wert mit 10%iger HCl auf 7,5 konstant gehalten wird. Zuletzt werden bei pH=1,8 300 g einer 32%igen TiCl₄-Lösung zugegeben. Nach 0,5 h Rühren bei pH=1,8 wird das beschichtete Glimmerpigment abfiltriert, gewaschen und bei 110°C 16 h getrocknet. Zuletzt wird das Pigment 1 h bei 800 °C geglüht.

### Beispiel 2

100 g Glimmer der Teilchengröße 10-60 µm werden in 2 l entmineralisiertem Wasser auf 75 °C aufgeheizt. Nach Erreichen dieser Temperatur wird unter starkem Rühren eine Lösung bestehend aus 3 g SnCl₄ x 5H₂O in 90 g Wasser langsam zu der Glimmersuspension zudosiert. Der pH-Wert wird mit 32%-iger Natronlauge konstant auf 2,0 gehalten. Danach wird der pH-Wert auf 1,8 gesenkt und bei diesem pH-Wert werden 380 g einer 32%igen TiCl₄-Lösung zudosiert, wobei der pH-Wert mit 32%iger Natronlauge konstant gehalten wird. Anschließend wird der pH-Wert auf 7,5 angehoben und bei diesem pH-Wert werden 380 g Natronwasserglaslösung (13,5 Gew.% SiO₂) langsam zudosiert, wobei der pH-Wert mit 10%iger HCl auf 7,5 konstant gehalten wird. Zuletzt werden bei pH=1,8 380 g einer 32%igen TiCl₄-Lösung zugegeben. Nach 0,5 h Rühren bei pH=1,8 wird das beschichtete Glimmerpigment abfiltriert, gewaschen und bei 110 °C 16 h getrocknet. Zuletzt wird das Pigment 1 h bei 800 °C geglüht.

### Beispiel 3

100 g Glimmer der Teilchengröße 10-60 µm werden in 2 I entmineralisiertem Wasser auf 75 °C aufgeheizt. Nach Erreichen dieser Temperatur wird unter starkem Rühren eine Lösung bestehend aus 3 g SnCl₄ x 5H₂O in 90 g Wasser langsam zu der Glimmersuspension zudosiert. Der pH-Wert wird mit 32%iger Natronlauge konstant bei 2,0 gehalten. Danach wird der pH-Wert auf 1,8 gesenkt und bei diesem pH-Wert werden 220 g einer 32%igen TiCl₄-Lösung zudosiert, wobei der pH-Wert mit 32%iger Natronlauge konstant gehalten wird. Anschließend wird der pH-Wert auf 7,5 angehoben und bei diesem pH-Wert werden 215 g Natronwasserglaslösung (13,5 Gew. % SiO₂) langsam zudosiert, wobei der pH-Wert mit 10%iger HCl auf 7,5 konstant gehalten wird. Zuletzt werden bei pH=1,8 300 g einer 32%igen TiCl₄-Lösung zugegeben. Nach 2,5 h Rühren bei pH=1,8 wird das beschichtete Glimmerpigment abfiltriert, gewaschen und bei 110 °C 16 h getrocknet. Zuletzt wird das Pigment 1 h bei 800 °C geglüht.

### Beispiel 4

100 g Glimmer der Teilchengröße 10-60 µm werden in 2 I entmineralisiertem Wasser auf 75 °C aufgeheizt. Nach Erreichen dieser Temperatur wird unter Rühren zu der Glimmersuspension eine Lösung bestehend 330 g einer 32%igen TiCl₄-Lösung zudosiert, wobei der pH-Wert mit 32%iger Natronlauge konstant auf 2,2 gehalten wird. Anschließend wird der pH-Wert auf 7,5 angehoben und bei diesem pH-Wert werden 270 g Natronwasserglaslösung (13,5 Gew. % SiO₂) langsam zudosiert, wobei der pH-Wert mit 10%iger HCl auf 7,5 konstant gehalten wird. Zuletzt werden bei pH=2,2 250 g einer 32%igen TiCl₄-Lösung zugegeben. Nach 5 h Rühren bei pH=2,2 wird das beschichtete Glimmerpigment abfiltriert, gewaschen und bei 110 °C 16 h getrocknet. Zuletzt wird das Silberpigment 1 h bei 800 °C geglüht.

Die nachfolgende Tabelle zeigt die koloristischen Daten der erfindungsgemäßen Pigmente im Vergleich zu einem Silberpigment, das dem Stand der Technik entspricht (Phyma-Lab-Werte, gemessen auf schwarzem Untergrund im Glanz 22,5°/22,5°):

| Pigment | L | a | b | C | Glanz zahl | Deckvermögen |
|---|---|---|---|---|---|---|
| Silberfarbenes PerlGlanzpigment Iriodin^{®} 103 (TiO₂-Glimmerpigment der TeilchenGröße 10-60 µm der Fa. Merck KGaA) | 83,6 | -1,4 | -1,9 | 2,4 | 58,5 | 30,6 |
| Silberpigment gemäß Beispiel 1 | 90,2 | -8,1 | -11,4 | 14,0 | 60,9 | 33,6 |
| Silberpigment gemäß Beispiel 2 | 93,0 | -5,5 | 13,0 | 14,1 | 61,3 | 37,0 |
| Silberpigment gemäß Beispiel 3 | 79,2 | -10,3 | -23,3 | 25,5 | 59,8 | 25,4 |
| Interferenzpigment gemäß Beispiel 4 | 84,5 | -8,1 | -10,5 | 13,3 | 61,4 | 27,2 |

## Patentansprüche

1. Silberfarbene Glanzpigmente auf der Basis von mehrfach beschichteten plättchenförmigen Substraten, die mindestens eine Schichtenfolge aus
(A) einer hochbrechenden Beschichtung bestehend aus TiO₂ mit einer Schichtdicke von 20-70 nm,
(B) einer farblosen Beschichtung mit einem Brechungsindex n ≤ 1,8 mit einer Schichtdicke von 20-100 nm,
(C) einer hochbrechenden Beschichtung bestehend aus TiO₂ mit einer Schichtdicke von 20-70 nm,
und optional
(D) einer äußeren Schutzschicht
enthalten.

2. Glanzpigmente nach Anspruch 1, **dadurch gekennzeichnet, dass** es sich bei den plättchenförmigen Substraten um natürlichen und/oder synthetischen Glimmer, Talkum, Kaolin, plättchenförmige Eisen- oder Aluminiumoxide, Glas-, Al₂O₃-, SiO₂-, TiO₂-, Graphitplättchen, synthetische trägerfreie Plättchen, Titannitrid, Titansilicid, Liquid crystal polymers (LCPs), holographische Pigmente, BiOCl oder plättchenförmige Mischoxide handelt.

3. Glanzpigmente nach Anspruch 1 oder 2, **dadurch gekennzeichnet, dass** es sich bei den plättchenförmigen Substraten um natürlichen oder synthetischen Glimmer, Glas-, Al₂O-, SiO₂- oder TiO₂-Plättchen handelt.

4. Glanzpigmente nach einem oder mehreren der Ansprüche 1 bis 3, **dadurch gekennzeichnet, dass** die TiO₂-Schichten (A) und (C) gleiche oder unterschiedliche Schichtdicken aufweisen.

5. Glanzpigmente nach einem oder mehreren der Ansprüche 1 bis 4, **dadurch gekennzeichnet, dass** die farblose niedrigbrechende Beschichtung (B) aus SiO₂, Al₂O₃, AIO(OH), B₂O₃, MgF₂, MgSiO₃ oder einem Gemisch der genannten Metalloxide besteht.

6. Glanzpigmente nach einem oder mehreren der Ansprüche 1 bis 5, **dadurch gekennzeichnet, dass** die Schicht (B) im Wesentlichen aus Siliziumdioxid, Aluminiumoxid, Magnesiumfluorid oder deren Gemischen besteht.

7. Glanzpigmente nach einem oder mehreren der Ansprüche 1 bis 6, **dadurch gekennzeichnet, dass** die Schicht (B) eine SiO₂-Schicht ist.

8. Glanzpigmente nach einem oder mehreren der Ansprüche 1 bis 7, **dadurch gekennzeichnet, dass** die Dicke der Schicht (B) 30-80 nm beträgt.

9. Glanzpigmente nach einem oder mehreren der Ansprüche 1 bis 8, **dadurch gekennzeichnet, dass** sie bis zu viermal die Schichtenfolge (A) + (B)+ (C) aufweisen.

10. Glanzpigmente nach einem oder mehreren der Ansprüche 1 bis 9, **dadurch gekennzeichnet, dass** sie nur eine Schichtenfolge (A) + (B) + (C) aufweisen.

11. Glanzpigmente nach einem oder mehreren der Ansprüche 1 bis 10, **dadurch gekennzeichnet, dass** die Belegung des Substrats mit nur einem Schichtpaket (A) + (B) + (C) + optional (D) erfolgt.

12. Glanzpigmente nach einem oder mehreren der Ansprüche 1 bis 11, **dadurch gekennzeichnet, dass** sie zu Erhöhung der Licht-, Temperatur- und Wetterstabilität eine äußere Schutzschicht (D) aufweisen.

13. Glanzpigmente nach einem oder mehreren der Ansprüche 1 bis 12, **dadurch gekennzeichnet, dass** sie in jedem Verhältnis mit handelsüblichen Pigmenten und Füllern gemischt werden.

14. Verfahren zur Herstellung der Glanzpigmente nach einem oder mehreren der Ansprüche 1 bis 13, **dadurch gekennzeichnet, dass** die Beschichtung der Substrate nasschemisch durch hydrolytische Zersetzung von Metallsalzen in wässrigem Medium erfolgt.

15. Verwendung der Glanzpigmente nach einem oder mehreren der Ansprüche 1 bis 13 in Farben, Lacken, Druckfarben, Sicherheitsdruckfarben, Kunststoffen, keramischen Materialien, Gläsern und in kosmetischen Formulierungen und zur Herstellung von Pigmentpräparationen und Trockenpräparaten.

16. Verwendung der Glanzpigmente nach Anspruch 15 in Nagellacken, Lippenstiften, Presspudern, Gelen, Lotionen, Seifen, Zahnpasta, in Autolacken, Industrielacken, Pulverlacken und für Window Colors.

17. Pigmentpräparationen enthaltend ein oder mehrere Bindemittel, optional ein oder mehrere Additive und ein oder mehrere Glanzpigmente gemäß einem oder mehreren der Ansprüche 1 bis 13.

18. Trockenpräparate wie Pellets, Granulate, Chips, Briketts enthaltend Glanzpigmente nach einem oder mehreren der Ansprüche 1 bis 13.

## Claims

1. Silver-coloured lustre pigments based on multicoated flake-form substrates, which comprise at least one layer sequence comprising
(A) a high-refractive-index coating consisting of TiO₂ having a layer thickness of 20-70 nm,
(B) a colourless coating having a refractive index n ≤ 1.8 having a layer thickness of 20-100 nm,
(C) a high-refractive-index coating consisting of TiO₂ having a layer thickness of 20-70 nm,
and optionally
(D) an outer protective layer.

2. Lustre pigments according to Claim 1, **characterised in that** the flake-form substrates are natural and/or synthetic mica, talc, kaolin, flake-form iron or aluminium oxides, glass flakes, Al₂O₃ flakes, SiO₂ flakes, TiO₂ flakes, graphite flakes, synthetic support-free flakes, titanium nitride, titanium silicide, liquid crystal polymers (LCPs), holographic pigments, BiOCl or flake-form mixed oxides.

3. Lustre pigments according to Claim 1 or 2, **characterised in that** the flake-form substrates are natural and/or synthetic mica, glass flakes, Al₂O₃ flakes, SiO₂ flakes or TiO₂ flakes.

4. Lustre pigments according to one or more of Claims 1 to 3, **characterised in that** the TiO₂ layers (A) and (C) have identical or different layer thicknesses.

5. Lustre pigments according to one or more of Claims 1 to 4, **characterised in that** the colourless low-refractive-index coating (B) consists of SiO₂, Al₂O₃, AIO(OH), B₂O₃, MgF₂, MgSiO₃ or a mixture of the said metal oxides.

6. Lustre pigments according to one or more of Claims 1 to 5, **characterised in that** layer (B) essentially consists of silicon dioxide, aluminium oxide, magnesium fluoride or mixtures thereof.

7. Lustre pigments according to one or more of Claims 1 to 6, **characterised in that** layer (B) is an SiO₂ layer.

8. Lustre pigments according to one or more of Claims 1 to 7, **characterised in that** the thickness of layer (B) is 30-80 nm.

9. Lustre pigments according to one or more of Claims 1 to 8, **characterised in that** it comprises the layer sequence (A) + (B) + (C) up to four times.

10. Lustre pigments according to one or more of Claims 1 to 9, **characterised in that** it comprises only one layer sequence (A) + (B) + (C).

11. Lustre pigments according to one or more of Claims 1 to 10, **characterised in that** the substrate is coated with only one layer package (A) + (B) + (C) + optionally (D).

12. Lustre pigments according to one or more of Claims 1 to 11, **characterised in that** it has an outer protective layer (D) in order to increase the light, temperature and weather stability.

13. Lustre pigments according to one or more of Claims 1 to 12, **characterised in that** they are mixed in any ratio with commercially available pigments and fillers.

14. Process for the preparation of the lustre pigments according to one or more of Claims 1 to 13, **characterised in that** the coating of the substrates is carried out by wet-chemical methods by hydrolytic decomposition of metal salts in aqueous medium.

15. Use of the lustre pigments according to one or more of Claims 1 to 13 in paints, coatings, printing inks, security printing inks, plastics, ceramic materials, glasses and in cosmetic formulations and for the preparation of pigment preparations and dry preparations.

16. Use of the lustre pigments according to Claim 15 in nail varnishes, lipsticks, compact powders, gels, lotions, soaps, toothpastes, in automotive paints, industrial coatings, powder coatings and for window colours.

17. Pigment preparations comprising one or more binders, optionally one or more additives and one or more lustre pigments according to one or more of Claims 1 to 13.

18. Dry preparations, such as pellets, granules, chips, briquettes, comprising lustre pigments according to one or more of Claims 1 to 13.

## Revendications

1. Pigments à lustre de couleur argent basés sur des substrats sous forme de flocons multi-revêtus, lesquels comprennent au moins une séquence de couches comprenant :
(A) un revêtement à indice de réfraction élevé constitué par du TiO₂ présentant une épaisseur de couche de 20-70 nm,
(B) un revêtement incolore présentant un indice de réfraction ≤ 1,8 présentant une épaisseur de couche de 20-100 nm,
(C) un revêtement à indice de réfraction élevé constitué par du TiO₂ présentant une épaisseur de couche de 20-70 nm,
et en option :
(D) une couche de protection externe.

2. Pigments à lustre selon la revendication 1, **caractérisés en ce que** les substrats sous forme de flocons sont du mica naturel et/ou synthétique, du talc, du caolin, des oxydes de fer ou d'aluminium sous forme de flocons, des flocons en verre, des flocons en Al₂O₃, des flocons en SiO₂, des flocons en TiO₂, des flocons en graphite, des flocons synthétiques exempts de support, du nitrure de titane, du siliciure de titane, des polymères à cristaux liquides (LCP), des pigments holographiques, de l'oxychlorure de bismuth (BiOCl) ou des oxydes mixtes sous forme de flocons.

3. Pigments à lustre selon la revendication 1 ou 2, **caractérisés en ce que** les substrats sous forme de flocons sont du mica naturel et/ou synthétique, des flocons en verre, des flocons en Al₂O₃, des flocons en SiO₂ ou des flocons en TiO₂.

4. Pigments à lustre selon une ou plusieurs des revendications 1 à 3, **caractérisés en ce que** les couches en TiO₂ (A) et (C) présentent des épaisseurs de couche identiques ou différentes.

5. Pigments à lustre selon une ou plusieurs des revendications 1 à 4, **caractérisés en ce que** le revêtement incolore à indice de réfraction faible (B) est constitué par du SiO₂, de l'Al₂O₃, de l'AIO(OH), du B₂O₃, du MgF₂, du MgSiO₃ ou par un mélange desdits oxydes métalliques.

6. Pigments à lustre selon une ou plusieurs des revendications 1 à 5, **caractérisés en ce que** la couche (B) est essentiellement constituée par du dioxyde de silicium, de l'oxyde d'aluminium, du fluorure de magnésium ou des mélanges afférents.

7. Pigments à lustre selon une ou plusieurs des revendications 1 à 6, **caractérisés en ce que** la couche (B) est une couche en SiO₂.

8. Pigments à lustre selon une ou plusieurs des revendications 1 à 7, **caractérisés en ce que** l'épaisseur de la couche (B) est de 30-80 nm.

9. Pigments à lustre selon une ou plusieurs des revendications 1 à 8, **caractérisés en ce qu'**ils comprennent la séquence de couches (A) + (B) + (C) jusqu'à quatre fois.

10. Pigments à lustre selon une ou plusieurs des revendications 1 à 9, **caractérisés en ce qu'**ils comprennent seulement une séquence de couches (A) + (B) + (C).

11. Pigments à lustre selon une ou plusieurs des revendications 1 à 10, **caractérisés en ce que** le substrat est revêtu de seulement un ensemble de couches (A) + (B) + (C) + en option (D).

12. Pigments à lustre selon une ou plusieurs des revendications 1 à 11, **caractérisés en ce qu'**ils comportent une couche de protection externe (D) afin d'augmenter la stabilité en terme de lumière, de température et de conditions environnementales.

13. Pigments à lustre selon une ou plusieurs des revendications 1 à 12, **caractérisés en ce qu'**ils sont mélangés selon n'importe quel rapport avec des pigments et des agents de remplissage disponibles commercialement.

14. Procédé pour la préparation des pigments à lustre selon une ou plusieurs des revendications 1 à 13, **caractérisé en ce que** le revêtement des substrats est mis en oeuvre au moyen de procédés chimiques par voie humide par décomposition hydrolytique de sels de métaux dans un milieu aqueux.

15. Utilisation des pigments à lustre selon une ou plusieurs des revendications 1 à 13 dans des peintures, des revêtements, des encres d'impression, des encres d'impression de sécurité, des matières plastiques, des matériaux de céramique, des verres et dans des formulations cosmétiques et pour la préparation de préparations de pigments et de préparations sèches.

16. Utilisation des pigments à lustre selon la revendication 15 dans des vernis à ongles, des rouges à lèvres, des poudres compactes, des gels, des lotions, des savons, des dentifrices, dans des peintures d'automobiles, des revêtements industriels, des revêtements pulvérulents et pour des couleurs de fenêtre.

17. Préparations de pigments comprenant un ou plusieurs agent(s) de liaison, en option un ou plusieurs additif(s) et un ou plusieurs pigment(s) à lustre selon une ou plusieurs des revendications 1 à 13.

18. Préparations sèches, telles que des pellets, des granules, des copeaux, des briquettes, comprenant des pigments à lustre selon une ou plusieurs des revendications 1 à 13.
